# EUROPÄISCHE PATENTSCHRIFT

(11) **EP 3 601 791 B1**
(45) Veröffentlichungstag und Bekanntmachung des Hinweises auf die Patenterteilung: **15.02.2023**
(21) Anmeldenummer: 18712595.0
(22) Anmeldetag: 21.03.2018
(51) Int. Cl.: F03D 13/20, E04H 12/08

(54) **FLANSCHSEGMENT FÜR EIN WINDENERGIEANLAGEN-STAHLTURMRINGSEGMENT UND VERFAHREN**
FLANGE SEGMENT FOR A WIND TURBINE, STEEL TOWER RING SEGMENT, AND METHOD
SEGMENT BRIDE POUR UN SEGMENT ANNULAIRE DE TOUR EN ACIER POUR ÉOLIENNE ET PROCÉDÉ ASSOCIÉ

(30) Priorität: 22.03.2017 DE 102017106201
(43) Veröffentlichungstag der Anmeldung: 05.02.2020
(73) Patentinhaber: Wobben Properties GmbH, 26607 Aurich (DE)
(72) Erfinder: KERSTEN, Roy, 39291 Hohenwarthe (DE)
(74) Vertreter: Eisenführ Speiser
(86) Internationale Anmeldenummer: PCT/EP2018/057087
(87) Internationale Veröffentlichungsnummer: WO 2018/172386

(56) Entgegenhaltungen:
- EP-A1- 2 798 134
- DE-A1-102015 115 645
- US-A1- 2010 024 311

## Beschreibung

Die Erfindung betrifft ein Flanschsegment für ein Windenergieanlagen-Stahlturmringsegment, einen Windenergieanlagen-Turmabschnitt, einen Windenergieanlagen-Turm, eine Windenergieanlage sowie ein Verfahren zur Herstellung eines Windenergieanlagen-Stahlturmringsegments.

Windenergieanlagen der eingangs genannten Art sind hinlänglich bekannt. Der derzeit gängigste Typ einer Windenergieanlage ist die sogenannte Horizontalachsenwindenergieanlage, die üblicherweise mit drei Rotorblättern ausgestattet ist, wobei auch Windenergieanlagen mit ein, zwei, vier oder mehr Rotorblättern möglich sind. Windenergieanlagen weisen zunehmend größere Bauformen auf, um einerseits eine höhere Nennleistung erreichen zu können und andererseits eine bessere Ausnutzung des Windes zu ermöglichen.

Windenergieanlagen umfassen neben einem an einer Gondel angeordneten Rotor in der Regel einen Turm, auf dem die Gondel mit dem Rotor um eine im Wesentlichen vertikal ausgerichtete Achse drehbar angeordnet ist. Türme sind in der Regel schlanke Bauwerke, die vorzugsweise eine große Höhe aufweisen und ferner vorzugsweise orthogonal zu dieser Höhe vergleichsweise geringe Abmessungen aufweisen. Türme bestehen vorzugsweise im Wesentlichen aus Beton und/oder Stahl oder umfassen diese Materialien. Die Bandbreite der Ausführung für Türme reicht von Gitterkonstruktionen über Stahlrohrtürme mit oder ohne Seilabspannung bis hin zu Betonbauten. Stahlrohrtürme können aus einem einzelnen Bauteil oder mehreren Bauteilen bestehen oder derartige Bauteile umfassen.

Türme können zylindrische und/oder konische Abschnitte, insbesondere entlang ihrer Längserstreckung, aufweisen, wobei Türme oftmals zylindrische und konische Bereiche umfassen. Diese Bereiche weisen vorzugsweise ringförmige Abschnitte auf. Darüber hinaus können derartige Abschnitte auch ringsegmentweise ausgebildet werden, so dass ein zylindrischer Abschnitt aus verschiedenen Segmenten in Ringrichtung zusammengesetzt ist. Einzelne zylindrische und/oder konische Abschnitte von Türmen können beispielsweise Einzelteilgewichte von ca. 30 Tonnen bis 50 Tonnen aufweisen. Für den Transport derartiger Abschnitte sind in der Regel Schwertransporte notwendig, die häufig mit hohen Kosten verbunden sind. Ferner sind Schwertransporte in der Regel zeitlich unflexibel, da in vielen Regionen/Ländern bestimmte, meist zeitbezogene, Fahrverbote bestehen.

Darüber hinaus kann die Handhabung derartig schwerer Abschnitte vor Ort beim Aufbau eines Turmes unvorteilhaft sein. Insbesondere bei widrigen Wetterverhältnissen wird der Aufbau eines Turmes häufig gestoppt, wenn schwere Abschnitte angeordnet werden, da diese schweren Abschnitte häufig eine große Windangriffsfläche aufweisen und der Wind somit einen Abschnitt mit einer schwierig einzuschätzenden Kraft beaufschlagen kann. Darüber hinaus ist die Befestigung der einzelnen Abschnitte aneinander mit Herausforderungen verbunden. In der Regel weisen die Abschnitte an ihren Verbindungsstellen Flansche auf, mit denen zwei vertikal benachbarte Abschnitte und/oder horizontal benachbarte Segmentbauteile miteinander verbunden werden. Die Flansche sind vorzugsweise als zusätzliches Bauteil an dem Abschnitt bzw. Segmentbauteil angeordnet. Zusätzlich angeordnete Flansche an den Abschnitten bzw. Segmentbauteilen werden in der Regel mittels Schweißen angebracht. Derartige Segmentbauteile zeichnen sich in der Regel dadurch aus, dass diese nur mit hohem Aufwand verbindbar sind. Insbesondere ist es trotz genauester Fertigung in der Regel nicht möglich völlig gleiche Segmentbauteile mit Flanschen herzustellen. Die existierenden segmentierten Stahltürmen und Verfahren zum Aufbau von segmentierten Stahltürmen für Windenergieanlagen bieten verschiedene Vorteile, jedoch sind weitere Verbesserungen wünschenswert.

Das Deutsche Patent- und Markenamt hat in der Prioritätsanmeldung zu vorliegender Anmeldung folgenden Stand der Technik recherchiert: DE 10 2013 016 604 A1, WO 2016/ 091 499 A1, DE 103 25 032 B3 und DE 101 26 049 A1.

Das Dokument WO 2013/097866 A1 offenbart einen ringförmigen Flansch zur Befestigung eines Turmsegments einer Windkraftanlage an einem anderen Turmsegment mit einer Verbindungsfläche, die mit einer entsprechenden Verbindungsfläche eines Flansches eines benachbarten Turmsegments zu verbinden ist.

Ein weiteres Dokument aus dem Stand der Technik ist US 2010 024311 A1.

Es ist daher eine Aufgabe der vorliegenden Erfindung, ein Flanschsegment für ein Windenergieanlagen-Stahlturmringsegment, einen Windenergieanlagen-Turmabschnitt, einen Windenergieanlagen-Turm, eine Windenergieanlage sowie ein Verfahren zur Herstellung eines Windenergieanlagen-Stahlturmringsegments bereitzustellen, welche einen oder mehrere der genannten Nachteile vermindern oder beseitigen. Insbesondere ist es eine Aufgabe der Erfindung, eine Lösung bereitzustellen, die die Montage von Stahltürmen für Windenergieanlagen vereinfacht. Darüber hinaus ist es eine Aufgabe der vorliegenden Erfindung, eine Lösung bereitzustellen, die den Fertigungs- und Montageaufwand eines Windenergieanlagen-Turms, insbesondere von Abschnitten des Windenergieanlagen-Turms, reduziert. Es ist ferner eine Aufgabe der Erfindung eine Lösung bereitzustellen, die eine kostengünstigere Windenergieanlage ermöglicht.

Gemäß einem ersten Aspekt der vorliegenden Erfindung wird die eingangs genannte Aufgabe gelöst durch ein Flanschsegment für ein Windenergieanlagen-Stahlturmringsegment, umfassend einen teilringförmigen Grundkörper, der sich von einem ersten Ende zu einem zweiten Ende in Ringrichtung erstreckt, mit einer Oberseite und einer der Oberseite gegenüberliegenden Unterseite, einer Innenumfangsseite und einer Außenumfangsseite, und einer ersten Stoßseite am ersten Ende und einer zweiten Stoßseite am zweiten Ende, einen Flanschvorsprung, welcher auf der Oberseite des Grundkörpers angeordnet ist, und sich im Wesentlichen von dem ersten Ende zum zweiten Ende in Ringrichtung erstreckt.

Das Flanschsegment umfasst einen teilringförmigen Grundkörper, der sich von einem ersten Ende zu einem zweiten Ende in Ringrichtung erstreckt. Die teilringförmige Geometrie des Grundkörpers bedeutet insbesondere, dass der Grundkörper die Geometrie eines Abschnittes eines Ringes aufweist. Der ringförmige Grundkörper erstreckt sich ferner in Ringrichtung, die vorzugsweise parallel zu einer tangentialen Richtung ausgerichtet ist. Darüber hinaus ist diese Ringrichtung vorzugsweise stets orthogonal zu einer radialen Richtung des teilringförmigen Grundkörpers ausgerichtet.

Das Flanschsegment ist vorzugsweise ausgebildet, dass dieses an einem Windenergieanlagen-Stahlturmringsegment angeordnet werden kann. Darüber hinaus ist das Flanschsegment vorzugsweise derart ausgebildet, dass dieses an einem ersten Windenergieanlagen-Stahlturmringsegment angeordnet wird und mit einem Flanschsegment eines vertikal benachbarten zweiten Windenergieanlagen-Stahlturmringsegments verbunden wird.

Insbesondere ist es bevorzugt, dass insgesamt zwei Flansche, oder drei Flansche, oder vier Flansche, oder fünf Flansche, oder sechs Flansche, oder sieben Flansche, oder acht Flansche, oder neun Flansche, oder zehn Flansche, oder elf Flansche, oder zwölf Flansche, oder dreizehn Flansche, oder vierzehn Flansche, oder mehr als vierzehn Flansche einen vollständige Ringform ausbilden und somit sich über 360 Bogengrad erstrecken. Darüber hinaus ist es besonders bevorzugt, dass die aneinander angeordneten Flanschsegmente einen Durchmesser von größer 3 Metern, insbesondere größer 3,5 Metern, vorzugsweise größer 4 Metern, insbesondere größer 4,1 Metern ausbilden.

In orthogonaler Richtung zur Ringrichtung und parallel zur Radialrichtung weist der teilringförmige Grundkörper vorzugsweise eine Breite auf. Orthogonal zur Breitenrichtung bzw. zur Richtung der Breite des Grundkörpers und orthogonal zur Ringrichtung erstreckt sich vorzugsweise eine Dicke des Grundkörpers. Der teilringförmige Grundkörper weist ferner eine Oberseite und eine der Oberseite gegenüberliegende Unterseite auf. Die Oberseite und die Unterseite werden vorzugsweise durch eine Erstreckung in Ringrichtung und eine Erstreckung in Breitenrichtung gebildet. Eine Flächennormale der Oberseite und/oder der Unterseite erstreckt sich vorzugsweise in Dickenrichtung. Ferner vorzugsweise erstreckt sich eine Richtungskomponente der Flächennormale der Oberseite und/oder der Unterseite in Dickenrichtung.

Darüber hinaus weist der teilringförmige Grundkörper die Innenumfangsseite und die Außenumfangsseite auf, die vorzugsweise durch die Erstreckung in Ringrichtung und in Dickenrichtung, das heißt in Richtung der Dicke, gebildet werden. Eine Flächennormale der Innenumfangsseite und/oder der Außenumfangsseite erstreckt sich vorzugsweise in Breitenrichtung. Ferner vorzugsweise erstreckt sich eine Richtungskomponente der Flächennormale der Innenumfangsseite und/oder der Außenumfangsseite in Breitenrichtung.

Des Weiteren weist der teilringförmige Grundkörper die erste Stoßseite am ersten Ende und die zweite Stoßseite am zweiten Ende auf, wobei die erste Stoßseite und die zweite Stoßseite vorzugsweise durch eine Erstreckung des Grundkörpers in Breitenrichtung und in Dickenrichtung gebildet werden. Eine Flächennormale der ersten Stoßseite und/oder der zweiten Stoßseite erstreckt sich vorzugsweise in Ringrichtung. Ferner vorzugsweise erstreckt sich eine Richtungskomponente der Flächennormale der ersten Stoßseite und/oder der zweiten Stoßseite in Ringrichtung.

Neben dem teilringförmigen Grundkörper weist das Flanschsegment einen Flanschvorsprung auf, welcher auf der Oberseite des Grundkörpers angeordnet ist.

Darüber hinaus erstreckt sich der Flanschvorsprung auf der Oberseite des Grundkörpers im Wesentlichen von dem ersten Ende zum zweiten Ende in Ringrichtung. Die Erstreckung des Flanschvorsprungs vom ersten Ende zum zweiten Ende in Ringrichtung kann vorzugsweise abschnittsweise unterbrochen sein. Ferner vorzugsweise ist die Erstreckung zwischen dem ersten Ende und dem zweiten Ende durchgängig.

Das Flanschsegment besteht vorzugsweise aus Stahl oder umfasst diesen. Insbesondere ist es bevorzugt, dass ein korrosionsbeständiger Stahl und/oder hochfester Stahl eingesetzt werden. Darüber hinaus kann es bevorzugt sein, dass das Flanschsegment aus einem NE (Nicht-Eisen)-Metall besteht oder diesen umfasst. Darüber hinaus kann das Flanschsegment aus einem Material bestehen oder ein Material umfassen ausgewählt aus der Gruppe bestehend aus Aluminium, Kunststoff, Holz, Beton, Keramik. Vorzugsweise bestehen der Grundkörper und der Flanschvorsprung aus dem gleichen Material. Ferner vorzugsweise umfassen der Grundkörper und der Flanschvorsprung das gleiche Material oder die gleichen Materialien. Darüber hinaus kann es bevorzugt sein, dass der Grundkörper aus einem anderen Material besteht als der Flanschvorsprung oder andere Materialien umfasst als der Flanschvorsprung. Insbesondere ist es bevorzugt, dass der Flanschvorsprung aus einem schweißbaren Material besteht und dieses zumindest abschnittsweise umfasst.

Der Erfindung liegt unter anderem die Erkenntnis zugrunde, dass Flanschsegmente gegenüber ringförmigen Flanschen, wie sie beispielsweise aus der DE 101 26 049 A1 und der DE 103 25 032 B3 bekannt sind, deutliche, unerwartete Vorteile aufweist. Bekannte ringförmige Verbindungsflansche wurden bisher insbesondere eingesetzt, da sie eine hohe Maßhaltigkeit ermöglichen, insbesondere auch bei Verbindungsverfahren wie Schweißen. Gleichzeitig stellen Türme mit großem Durchmesser eine große Herausforderung aufgrund der auf bestehenden Abmessungsbeschränkungen auf bestehenden Transportwegen dar. Die Erfindung beruht unter anderem auf der Erkenntnis, dass die erforderliche hohe Maßhaltigkeit mit Flanschsegmenten dann erreicht werden kann, wenn ein Flanschvorsprung vorgesehen wird. Ein solcher Flanschvorsprung ist insbesondere geeignet, mit einem Mantelsegment eines Stahlturmringsegments verbunden zu werden.. Auf diese Weise kann eine Verbindung mit einem Stahlturmringsegment hergestellt werden, die eine deutlich höhere Maßhaltigkeit aufweist, da z.B. Verformungen beim Verbinden, etwa durch Verzug beim Schweißen, stark reduziert oder sogar vermieden werden.

Der Erfindung liegt unter anderem die Erkenntnis zugrunde, dass durch das Anschweißen von Flanschsegmenten an Windenergieanlagen-Stahlturmringsegmenten eine unerwünschte Verformung, insbesondere ein Verzug, des Windenergieanlagen-Stahlturmringsegments resultiert kann. Durch diese Verformung ist das Anordnen von zwei oder mehr Windenergieanlagen-Stahlturmringsegmenten aneinander nur erschwert möglich oder die Anordnung ist nicht möglich. Insbesondere sind deutlich aufwendigere Positionierungs- und Befestigungsmaßnahmen notwendig, um die Windenergieanlagen-Stahlturmringsegmente miteinander zu verbinden. Um die Windenergieanlagen-Stahlturmringsegmente dennoch zu verbinden oder diese in eine montagefähige Form zu bringen, entstehen Kosten und der Montageablauf kann gestört werden. Das erfindungsgemäße Flanschsegment kann stirnseitig oder an einem inneren oder äußeren Umfangsabschnitt eines Windenergieanlagen-Stahlturmringsegments angeordnet werden und vorzugsweise mit diesem verschweißt werden. Durch eine Schweißnaht am Flanschvorsprung des Flanschsegments befindet sich die Schweißnaht in beabstandeter Position zu dem teilringförmigen Grundkörper. Die bei einem Schweißprozess auftretende thermische Energie fließt somit im Wesentlichen in den Flanschvorsprung und nicht in den teilringförmigen Grundkörper. In Folge dessen verzieht sich der Grundkörper vergleichsweise wenig oder nicht und in Folge dessen wiederum wird auch das Stahlturmringsegment lediglich in sehr geringem Maße oder nicht verformt.

Es besteht durch die Erfindung nun die Möglichkeit, die Windenergieanlagen-Stahlturmringsegmente in Serienproduktion herzustellen und die Flanschsegmente mittels bekannter Fertigungsverfahren ebenfalls in Serienproduktion herzustellen. Die Anordnung des Flanschsegmentes an einem korrespondierenden Stahlturmringsegment kann mittels verschiedener Schweißverfahren erfolgen. Bevorzugte Schweißverfahren sind z.B. Unterpulverschweißen, auch UP-Schweißen genannt, und/oder MetallSchweißen mit aktiven, also reaktionsfähigen, Gasen, auch MAG-Schweißen genannt, und/oder Elektrodenschweißen.

In einer bevorzugten Fortbildung des Flanschsegments ist vorgesehen, dass sich der Flanschvorsprung in seiner Haupterstreckungsrichtung von einem ersten Ende zu einem zweiten Ende erstreckt und zwischen dem ersten Ende und dem zweiten Ende zumindest abschnittsweise einen polygonalen Verlauf aufweist. In dieser bevorzugten Fortbildung weist die Erstreckung des Flanschvorsprungs vorzugsweise keine Teilringgeometrie mit kreisrundem Abschnitt auf, sondern mit einem polygonalen Abschnitt mit mindestens einer Abkantung. Unter einer Abkantung wird insbesondere die Stelle verstanden, an der sich die Haupterstreckungsrichtung ändert. An der Stelle der Abkantung wird am Innenumfang vorzugsweise eine Nische ausgebildet. Vorzugsweise weist der Flanschvorsprung zwischen einer ersten Abkantung und einer zweiten Abkantung einen geraden Abschnitt auf. Ferner oder alternativ vorzugsweise weist der Flanschvorsprung zwischen einer ersten Abkantung und einer zweiten Abkantung einen gebogenen Abschnitt auf, wobei der Radius dieses gebogenen Abschnitts insbesondere kleiner oder größer als der Radius des ringförmigen Verlaufs des Flanschvorsprungs ist. Darüber hinaus kann es bevorzugt sein, dass der Flanschvorsprung an seiner Innenumfangsfläche einen runden Verlauf zwischen dem ersten Ende und dem zweiten Ende aufweist und an seiner Außenumfangsfläche einen polygonalen Verlauf zwischen dem ersten Ende und dem zweiten Ende aufweist. Ferner kann es bevorzugt sein, dass der Flanschvorsprung an seiner Außenumfangsfläche einen runden Verlauf zwischen dem ersten Ende und dem zweiten Ende aufweist und an seiner Innenumfangsfläche einen polygonalen Verlauf zwischen dem ersten Ende und dem zweiten Ende aufweist.

Ferner ist es bevorzugt, dass der Flanschvorsprung in seiner Haupterstreckungsrichtung durch zwei oder mehrere gerade Abschnitte ausgebildet wird, wobei die geraden Abschnitte einen Winkel einschließen, der vorzugsweise kleiner-gleich 6 Bogengrad und/oder kleiner-gleich 12 Bogengrad und/oder größer 12 Bogengrad ist. Insbesondere ist es bevorzugt, dass die zwei oder mehreren geraden Abschnitte des Flanschvorsprungs einen polygonalen Verlauf des Flanschvorsprungs ausbilden.

Ein polygonaler Verlauf und/oder zwei oder mehrere gerade Abschnitte können den besonderen Vorteil bieten, dass an dem Flanschsegment ein abgekantetes Windenergieanlagen-Turmsegment anordenbar ist. Insbesondere wird allgemein eine verbesserte und im Speziellen eine festere und günstigere Verbindung ermöglicht. Die Kosten eines gesamten Windenergieanlagen-Turms können somit deutlich verringert werden, trotz gleichbleibender oder besserer Festigkeit.

In einer bevorzugten Ausführungsvariante des Flanschsegments ist vorgesehen, dass dieses eine äußere obere Kante umfasst, die von der Oberseite und der Außenumfangsseite ausgebildet wird, wobei der Flanschvorsprung an die äußere obere Kante angrenzt, wobei vorzugsweise eine Außenseite des Flanschvorsprungs mit der Außenumfangsseite fluchtet, so dass die Außenseite des Flanschvorsprungs und die Außenumfangsseite des Grundkörpers eine Flanschsegmentaußenfläche ausbilden.

Gemäß dem ersten Aspekt ist vorgesehen, dass das Flanschsegment eine innere obere Kante umfasst, die von der Oberseite und der Innenumfangsseite ausgebildet wird, wobei der Flanschvorsprung an die innere obere Kante angrenzt, wobei eine Innenseite des Flanschvorsprungs mit der Innenumfangsseite fluchtet, so dass die Innenseite des Flanschvorsprungs und die Innenumfangsseite des Grundkörpers eine Flanschsegmentinnenfläche ausbilden.

Ein Flanschvorsprung, der an die äußere obere Kante angrenzt, hat insbesondere den Vorteil, dass dieser bei Anordnung des Flanschsegments an einer Innenumfangsfläche eines Windenergieanlagen-Stahlturmringsegments, unmittelbar an der Innenumfangsfläche des Stahlturmringsegments anordenbar ist und hier mit diesem verschweißt werden kann. Die Anordnung des Flanschvorsprungs an einer inneren oberen Kante hat insbesondere den Vorteil, dass die Befestigung des Flanschsegments an einem Windenergieanlagen-Stahlturmringsegment an dessen Stirnseite besonders vorteilhaft erfolgen kann.

Gemäß einer weiteren bevorzugten Ausführungsvariante des Flanschsegments ist vorgesehen, dass der Flanschvorsprung in radialer Richtung, insbesondere in Breitenrichtung, derart zwischen der äußeren oberen Kante und der inneren oberen Kante angeordnet ist, dass zwischen dem Flanschvorsprung und der äußeren oberen Kante eine äußere Schulterfläche ausgebildet ist, deren Flächennormale vorzugsweise orthogonal zur Ringrichtung und zur radialen Richtung ausgebildet, ist und/oder zwischen dem Flanschvorsprung und der inneren oberen Kante eine innere Schulterfläche ausgebildet ist, deren Flächennormale vorzugsweise orthogonal zur Ringrichtung und zur radialen Richtung ausgerichtet ist. Die Schulterflächen sind im Wesentlichen die Flächen der Oberseite, an der der Flanschvorsprung und mit diesem korrespondierende Elemente, beispielsweise die im Folgenden noch zu beschreibenden Fortsätze, nicht angeordnet sind.

Die Schulterflächen können beispielsweise als Anordnungsflächen für die Windenergieanlagen-Stahlturmringsegmente dienen, wobei es insbesondere bevorzugt ist, ein derartig ausgebildetes Flanschsegment stirnseitig an den Windenergieanlagen-Stahlturmringsegmenten anzuordnen. Insbesondere können die Windenergieanlagen-Stahlturmringsegmente an diesen Schulterflächen angeordnet werden, so dass die Schulterflächen, gegebenenfalls in Kombination mit dem Flanschvorsprung, als Positionierungshilfe fungieren. Somit kann eine formschlüssige Positionierung des Flanschsegmentes an den Windenergieanlagen-Stahlturmringsegmenten realisiert werden, so dass die Befestigung der Flanschsegmente an den Windenergieanlagen-Stahlturmringsegmenten vereinfacht wird.

Es ist ferner bevorzugt, dass ein Übergang von dem Flanschvorsprung zu der inneren Schulterfläche durch eine Freiformfläche ausgebildet ist, wobei die Freiformfläche vorzugsweise derart ausgebildet ist, dass zwischen einer der inneren Schulterfläche zugewandten Innenumfangsseite des Flanschvorsprungs und der inneren Schulterfläche ein Radius ausgebildet ist. Ferner ist eine Fortbildung bevorzugt, bei der ein Übergang von dem Flanschvorsprung zur äußeren Schulterfläche durch eine Freiformfläche ausgebildet ist, wobei die Freiformfläche vorzugsweise derart ausgebildet ist, dass zwischen einer der äußeren Schulterfläche zugewandten Außenumfangsseite des Flanschvorsprungs und der äußeren Schulterfläche ein Radius ausgebildet ist. Insbesondere ist es bevorzugt, dass der Radius kleiner 3 mm, und/oder kleiner 5 mm, und/oder kleiner 10 mm, und/oder größer 10 mm ist. Ferner vorzugsweise ist die Freiformfläche konvex und/oder konkav ausgebildet. Darüber hinaus kann der Übergang auch kehlnahtförmig ausgebildet sein.

Eine weitere bevorzugte Fortbildung des Flanschsegments zeichnet sich dadurch aus, dass die äußere Schulterfläche und/oder die innere Schulterfläche eine, zwei oder mehrere Durchtrittsöffnungen aufweist bzw. aufweisen, deren Durchtrittsrichtung bzw. deren Durchtrittsrichtungen vorzugsweise parallel zur Flächennormalen der äußeren Schulterfläche und/oder der inneren Schulterfläche und/oder Dickenrichtung ausgerichtet ist bzw. sind. Die Durchtrittsöffnungen ermöglichen insbesondere die Anordnung des Flanschsegmentes an einem benachbarten Befestigungselement, vorzugsweise einem weiteren Flanschsegment. Insbesondere ist es bevorzugt, dass das Flanschsegment drei oder mehrere Durchtrittsöffnungen aufweist, die äquidistant voneinander beabstandet sind und ferner vorzugsweise Mittelpunkte aufweisen, die auf einer Kurve in Ringrichtung angeordnet sind.

Es ist vorgesehen, dass sich der Flanschvorsprung von einem ersten Vorsprungende zu einem zweiten Vorsprungende erstreckt, und an dem ersten Vorsprungende eine erster Fortsatz und/oder an dem zweiten Vorsprungende ein zweiter Fortsatz angeordnet ist, wobei sich der erste Fortsatz und/oder der zweite Fortsatz in radialer Richtung erstreckt bzw. erstrecken. Ferner ist vorzugsweise vorgesehen, dass sich der erste Fortsatz in Richtung einer ersten seitlichen oberen Kante, die von der Oberseite und der ersten Stoßseite ausgebildet wird, erstreckt, und/oder der zweite Fortsatz in Richtung einer zweiten seitlichen Kante, die von der Oberseite und der zweiten Stoßseite ausgebildet wird, erstreckt.

Die Fortsätze weisen vorzugsweise eine Haupterstreckungsrichtung auf, in der die Fortsätze sich in Richtung ihrer Länge erstrecken. Die Fortsätze weisen vorzugsweise eine Länge auf, die größer ist als eine Breite und eine Höhe. Es ist insbesondere bevorzugt, dass die Haupterstreckungsrichtungen der Fortsätze im Wesentlichen parallel zu der radialen Richtung und/oder Breitenrichtung ausgerichtet sind.

Ein oder zwei Fortsätze des Flanschvorsprungs können insbesondere die Anordnung des Flanschsegments an Windenergieanlagen-Stahlturmringsegmenten verbessern. Insbesondere abgekantete Flansche an vertikalen Stoßseiten von Windenergieanlagen-Stahlturmringsegmenten können mit ihren horizontalen Stoßseiten unmittelbar mit den Fortsätzen des Flanschvorsprungs verbunden werden. Somit ergibt sich eine verbesserte und sicherere Anordnung des Flanschsegmentes an Windenergieanlagen-Stahlturmringsegmenten.

Es ist ferner bevorzugt, dass der Grundkörper eine Grundkörperquerschnittsfläche aufweist, deren Flächennormale parallel zur Ringrichtung ausgerichtet ist, wobei die Grundkörperquerschnittsfläche einen dreieckigen, viereckigen, insbesondere einen quadratischen, und/oder polygonalen Querschnitt aufweist. Vorzugsweise weist der Flanschvorsprung eine Vorsprungquerschnittsfläche auf, die entlang seiner Erstreckung in Bezug auf seine Größe und seine Geometrie konstant ist. Ferner vorzugsweise weist der Flanschvorsprung eine Vorsprungquerschnittsfläche entlang seiner Erstreckung auf, die in Bezug auf seine Größe und/oder Geometrie variabel ist. Insbesondere ist es bevorzugt, dass die Vorsprungquerschnittsfläche einen viereckigen, insbesondere einen quadratischen, Querschnitt aufweist. Ferner vorzugsweise kann die Vorsprungquerschnittsfläche einen dreieckigen Querschnitt und/oder einen halbkreisförmigen Querschnitt aufweisen. Insbesondere ist es bevorzugt, dass die Vorsprungquerschnittsfläche in einem der Oberseite abgewandten Abschnitte verjüngt ist, und vorzugsweise an seinem der Oberseite abgewandten Ende eine Fase aufweist und/oder abgeschrägt ist, und/oder die Vorsprungquerschnittsfläche einen der Oberseite zugewandten ersten Querschnittsabschnitt aufweist, und einen der Oberseite abgewandten, an dem ersten Querschnittsabschnitt angeordneten zweiten Querschnittsabschnitt aufweist, wobei der zweite Querschnittsabschnitt eine im Wesentlichen dreieckige Geometrie und/oder eine trapezförmige Geometrie aufweist.

Es ist ferner vorzugsweise vorgesehen, dass das Flanschsegment einstückig ausgebildet ist. Vorzugsweise ist das Flanschsegment aus dem Vollen hergestellt, wobei insbesondere ein Fräsverfahren eingesetzt werden kann. Ferner vorzugsweise ist das Flanschsegment urformtechnisch hergestellt, beispielsweise mittels eines Gießverfahrens und generativen Herstellungsverfahrens.

Gemäß einem weiteren Aspekt der vorliegenden Erfindung wird die eingangs genannte Aufgabe gelöst durch ein Windenergieanlagen-Stahlturmringsegment umfassend ein Mantelsegment mit einer Erstreckung in Richtung einer Höhe, einer Ringrichtung und einer Breite, umfassend eine erste horizontale Stoßseite und eine zweite horizontale Stoßseite, wobei im montierten Zustand die erste horizontale Stoßseite einem Turmfundament und die zweite horizontale Stoßseite einer Turmspitze zugewandt ist, wobei an der ersten horizontalen Stoßseite und/oder an der zweiten horizontalen Stoßseite ein Flanschsegment nach mindestens einer der im Vorherigen genannten Ausführungsvarianten angeordnet ist und/oder anordenbar ist.

Die Höhe des Windenergieanlagen-Stahlturmringsegment erstreckt sich im Betriebsmodus vorzugsweise im Wesentlichen parallel zur Höhe bzw. Längserstreckung des Turmes. Darunter fallen hier auch konische Abschnitte eines Turms, die zwar einen Winkel zur Erstreckung in Richtung der Höhe oder der Längserstreckung des Turmes aufweisen, wobei dieser Winkel jedoch bei den Abmaßen eines Turmes derart gering ist, dass dieser hier zu vernachlässigen ist.

Die Breite des Windenergieanlagen-Stahlturmringsegment erstreckt sich vorzugsweise in radialer Richtung. Die Ringrichtung ist vorzugsweise im Wesentlichen orthogonal zu der Höhe und zu der Breite des Windenergieanlagen-Stahlturmringsegments ausgerichtet. Die erste horizontale Stoßseite und die zweite horizontale Stoßseite werden vorzugsweise durch die Erstreckung des Windenergieanlagen-Stahlturmringsegments in Ringrichtung und in Richtung der Breite ausgebildet. Die Anordnung des Flanschsegments an der ersten horizontalen Stoßseite und/oder an der zweiten horizontalen Stoßseite kann beispielsweise stirnseitig erfolgen. Alternativ oder zusätzlich kann das Flanschsegment auch an einer inneren Umfangsfläche des Windenergieanlagen-Stahlturmringsegments angeordnet werden. In einer besonders bevorzugten Ausführungsvariante ist das Flanschsegment derart ausgebildet, dass dieses stirnseitig und innenumfangsseitig an dem Windenergieanlagen-Stahlturmringsegment angeordnet ist. Ferner kann das Flanschsegment auch vollständig oder teilweise an einem Außenumfangsabschnitt des Windenergieanlagen-Stahlturmringsegments angeordnet werden.

Darüber hinaus resultiert ein derartiges Windenergieanlagen-Stahlturmringsegments darin, dass eine bessere Lasteinleitung in ein Windenergieanlage-Stahlturmringsegment infolge besserer Lastverteilung innerhalb des Bauteils über Reibung und Vorspannkraft der Schrauben erfolgt.

Eine bevorzugte Ausführungsvariante des Windenergieanlagen-Stahlturmringsegments sieht vor, dass das Flanschsegment mit dem Windenergieanlagen-Stahlturmringsegment mittels einer Verbindung verbunden und/oder verbindbar ist, die in einem Bereich, der an den Flanschvorsprung und das Windenergieanlagen-Stahlturmringsegment angrenzt, angeordnet ist. Darüber hinaus ist es bevorzugt, dass die Verbindung als mindestens eine Schweißnaht ausgebildet ist. Eine Schweißnaht ist das Ergebnis eines Schweißprozesses, der das unlösbare Verbinden von Bauteilen unter Anwendung von Wärme und/oder Druck mit oder ohne Schweißzusatzwerkstoffe darstellt. Vorzugsweise erfolgt die Verbindung des Flanschsegments mit dem Windenergieanlagen-Stahlturmringsegments mittels Pressschweißen. Darüber hinaus ist es bevorzugt, dass das Schmelzschweißen angewendet wird. Insbesondere ist es bevorzugt, dass das Flanschsegment derart angeordnet und ausgebildet wird, dass eine Kehlnaht angeordnet werden kann. Darüber hinaus kann es bevorzugt sein, dass eine Stumpfnaht angeordnet wird.

In einer besonders bevorzugten Fortbildung des Windenergieanlagen-Stahlturmringsegments umfasst dieses eine erste vertikale Stoßseite und eine zweite vertikale Stoßseite, die im Wesentlichen orthogonal zu den horizontalen Stoßseiten angeordnet sind, wobei an der ersten vertikalen Stoßseite ein erster vertikaler Flansch, und/oder wobei an der zweiten vertikalen Stoßseite ein zweiter vertikaler Flansch angeordnet ist, wobei der erste vertikale Flansch und/oder der zweite vertikale Flansch derart angeordnet und ausgebildet ist bzw. sind, dass diese mit einem vertikalen Flansch eines benachbarten Windenergieanlagen-Stahlturmringsegment verbindbar sind, und wobei der erste vertikale Flansch und/oder der zweite vertikale Flansch in radialer Richtung nach innen ragen.

Unter einer vertikalen Stoßseite ist insbesondere eine Stoßseite zu verstehen, die sich im Betriebsmodus im Wesentlichen in vertikaler Richtung erstreckt. Insbesondere ist darunter eine Stoßseite zu verstehen, die im Wesentlichen parallel zu einer Höhe eines Windenergieanlagen-Turms ausgerichtet ist. Bei kegelförmigen Türmen bzw. Türmen mit kegelförmigen Abschnitten ist auch die Erstreckung der kegelförmigen Elemente als vertikal zu verstehen. Eine Flächennormale der vertikalen Stoßseite ist vorzugsweise im Wesentlichen in Ringrichtung ausgerichtet. Der erste vertikale Flansch und/oder der zweite vertikale Flansch ragen in radialer Richtung nach Innen. Dies bedeutet insbesondere, dass Flächennormalen der Flansche in Ringrichtung ausgerichtet sind. Diese Flächennormalen stehen insbesondere auf solchen Flächen der Flansche, die dazu ausgebildet und angeordnet sind, an einem weiteren Flansch anzuliegen, um diese dann zu verbinden. Ferner vorzugsweise weisen die Flansche Durchtrittsöffnungen auf, die bevorzugt Durchtrittsrichtungen aufweisen, die in Ringrichtung ausgerichtet sind.

Darüber hinaus ist es bevorzugt, dass das Mantelsegment einen teilringförmigen Querschnitt aufweist, dessen Flächennormale im Wesentlichen parallel zur Höhe ausgerichtet ist, und wobei der teilringförmige Querschnitt eine teilringförmige Geometrie aufweist. Ferner ist es bevorzugt, dass der teilringförmige Querschnitt des Mantelsegments durch zwei oder mehrere gerade Abschnitte ausgebildet wird, wobei die zwei oder mehreren geraden Abschnitte gewinkelt zueinander angeordnet sind. Durch zwei oder mehrere gewinkelt zueinander angeordnete Abschnitte entsteht eine gekantete Mantelfläche. Darüber hinaus ist bevorzugt, dass der erste vertikale Flansch durch einen geraden Abschnitt ausgebildet ist, der gewinkelt zu dem Mantelsegment angeordnet ist, und/oder der zweite vertikale Flansch durch einen geraden Abschnitt ausgebildet ist, der gewinkelt zu dem Mantelsegment angeordnet ist. Durch derartig ausgebildete vertikale Flansche werden insbesondere abgekantete Flansche gebildet, die insbesondere zur Verbindung zweier horizontal benachbarter Windenergieanlagen-Stahlturmringsegmente geeignet sind. In einer bevorzugten Fortbildung ist ferner vorgesehen, dass das Mantelsegment und der erste vertikale Flansch und der zweite vertikale Flansch einstückig ausgebildet sind.

Insbesondere ist es bevorzugt, dass zwischen dem geraden Abschnitt des ersten vertikalen Flansches und/oder dem zweiten vertikalen Flansch ein Winkel zum Mantelsegment von kleiner 90 Bogengrad vorherrscht. Insbesondere ist es bevorzugt, dass der erste vertikale Flansch und/oder der zweite vertikale Flansch aus dem gleichen Material bestehen wie das Mantelsegment. Darüber hinaus ist es bevorzugt, dass der erste vertikale Flansch und der zweite vertikale Flansch umgebogene Abschnitte des Mantelsegments sind, sodass abgekantete Flansche gebildet werden. Insbesondere ist es bevorzugt, dass die umgebogenen Abschnitte mit einem Biegeverfahren eingebracht werden. In einer bevorzugten Ausführungsvariante des Windenergieanlagen-Stahlturmringsegment ist ferner vorgesehen, dass dieses aus Stahl besteht oder Stahl umfasst. Ferner vorzugsweise kann das Windenergieanlagen-Stahlturmringsegment aus Aluminium bestehen oder dieses umfassen.

Gemäß einem weiteren Aspekt der vorliegenden Erfindung wird die eingangs genannte Aufgabe gelöst durch einen Windenergieanlagen-Turmabschnitt, umfassend mindestens ein erstes Windenergieanlagen-Stahlturmringsegment nach mindestens einer der im Vorherigen beschriebenen Ausführungsvariante und ein zweites Windenergieanlagen-Stahlturmringsegment nach mindestens einer der im Vorherigen beschriebenen Ausführungsvarianten, wobei das erste Windenergieanlagen-Stahlturmringsegment und das zweite Windenergieanlagen-Stahlturmringsegment an mindestens einem im Wesentlichen vertikalen Stoß mit jeweils einer der vertikalen Stoßseiten aneinander stoßen. Insbesondere ist es bevorzugt, dass die Windenergieanlagen-Stahlturmringsegmente vertikale Flansche, insbesondere mit Durchtrittsöffnung, aufweisen, an denen diese mit einem benachbarten Windenergieanlagen-Stahlturmringsegment befestigt werden können. Insbesondere ist es bevorzugt, dass der Windenergieanlagen-Turmabschnitt zwei oder mehr Windenergieanlagen-Stahlturmringsegmente aufweist. Ferner ist es bevorzugt, dass die Windenergieanlagen-Stahlturmringsegmente an dem vertikalen Stoß mit einer Toleranz von plus/minus 0,1 mm und/oder plus/minus 0,2 mm angeordnet werden.

Gemäß einem weiteren Aspekt der vorliegenden Erfindung wird die eingangs genannte Aufgabe gelöst durch einen Windenergieanlagen-Turm, umfassend zwei oder mehrere übereinander angeordnete Windenergieanlagen-Turmabschnitte, nach dem im Vorhergehenden genannten Aspekt. Insbesondere ist es bevorzugt, dass die übereinander angeordneten Windenergieanlagen-Turmabschnitte Flanschsegmente gemäß den im Vorhergehenden beschriebenen Ausführungsvarianten umfassen, und übereinander benachbart angeordnete Windenergieanlagen-Turmabschnitte mittels der Flanschsegmente aneinander befestigt werden. Darüber hinaus ist es bevorzugt, dass die Windenergieanlagen-Turmabschnitte bestehend aus Windenergieanlagen-Stahlturmringsegment derart übereinander angeordnet sind, dass ein erster Stoß eines ersten Windenergieanlagen-Turmabschnitts in vertikaler Richtung nicht unmittelbar über einem Stoß eines zweiten Windenergieanlagen-Turmabschnitts angeordnet ist.

Gemäß einem weiteren Aspekt der vorliegenden Erfindung wird die eingangs genannte Aufgabe gelöst durch eine Windenergieanlage umfassend einen Windenergieanlagen-Turm nach dem im Vorhergehenden beschriebenen Aspekt.

Gemäß einem weiteren Aspekt der vorliegenden Erfindung wird die eingangs genannte Aufgabe gelöst durch ein Verfahren zur Herstellung eines Windenergieanlagen-Stahlturmringsegments nach dem im Vorhergehenden beschriebenen Ausführungsvarianten, umfassend Bereitstellen eines Mantelsegments mit einer Erstreckung in Richtung einer Höhe, einer Ringrichtung und einer Breite, umfassend eine erste horizontale Stoßseite und eine zweite horizontale Stoßseite, wobei im montierten Zustand die erste horizontale Stoßseite einem Turmfundament und die zweite horizontale Stoßseite einer Turmspitze zugewandt ist, Herstellen und bereitstellen mindestens eines Flanschsegments nach mindestens einem der im Vorhergehenden beschriebenen Ausführungsvarianten, wobei das Flanschsegment vorzugsweise aus einem Stück Rohmaterial, insbesondere mittels eines Fräsverfahrens, hergestellt ist, Anordnen eines Flanschsegments an einem ersten Innenumfangsabschnitts, der an die erste horizontale Stoßseite angrenzt, und/oder Anordnen eines Flanschsegments an einem zweiten Innenumfangsabschnitt, der an die zweite horizontale Stoßseite angrenzt, Verbinden des Flanschsegments bzw. der Flanschsegmente mit dem Mantelsegment, wobei vorzugsweise das Verbinden des Flanschsegments bzw. der Flanschsegmente mit dem Mantelsegment mittels einer Schweißnaht erfolgt, die vorzugsweise in einem Bereich angrenzend an den Flanschvorsprung und das Windenergieanlagen-Stahlturmringsegment angeordnet wird.

Gemäß einem weiteren Aspekt der vorliegenden Erfindung wird die eingangs genannte Aufgabe gelöst durch ein Verfahren zur Herstellung eines Windenergieanlagen-Turmabschnitts nach einem der im Vorhergehenden beschriebenen Ausführungsvarianten, umfassend Bereitstellen mindestens eines ersten Windenergieanlagen-Stahlturmringsegments nach mindestens einer der im Vorhergehenden beschriebenen Ausführungsvarianten und eines zweiten Windenergieanlagen-Stahlturmringsegments nach mindestens einer der im Vorhergehenden beschriebenen Ausführungsvarianten, Anordnen des ersten Windenergieanlagen-Stahlturmringsegments und des zweiten Windenergieanlagen-Stahlturmringsegments an mindestens einem vertikalen Stoß mit jeweils einer der vertikalen Stoßseiten, Verbinden des ersten Windenergieanlagen-Stahlturmringsegments und des zweiten Windenergieanlagen-Stahlturmringsegments an dem mindestens einen vertikalen Stoß, wobei vorzugsweise das erste Windenergieanlagen-Stahlturmringsegment und das zweite Windenergieanlagen-Stahlturmringsegment vertikale Flansche aufweisen, die an der Innenumfangsfläche angrenzend an die Kante zur ersten Stoßseite und/oder zweiten Stoßseite angeordnet sind, wobei ferner vorzugsweise das erste Windenergieanlagen-Stahlturmringsegment und das zweite Windenergieanlagen-Stahlturmringsegment durch die Befestigung zweier benachbarter vertikaler Flansche miteinander verbunden werden.

Die erfindungsgemäßen Verfahren und ihre möglichen Fortbildungen weisen Merkmale bzw. Verfahrensschritte auf, die sie insbesondere dafür geeignet machen für ein erfindungsgemäßes Flanschsegment und seine Fortbildungen verwendet zu werden. Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen des Flanschsegments verwiesen. Bevorzugte Ausführungsformen der Erfindung werden beispielhaft anhand der beiliegenden Figuren erläutert. Es zeigen:
- Fig. 1:: eine schematische Ansicht einer beispielhaften Ausführungsform einer Windenergieanlage;
- Fig. 2:: eine schematische, dreidimensionale Ansicht einer beispielhaften Ausführungsform eines Windenergieanlagen-Turms;
- Fig. 3:: eine schematische, dreidimensionale Detailansicht des Turms aus Fig. 2;
- Fig. 4:: eine schematische, dreidimensionale Ansicht einer beispielhaften Ausführungsform eines Windenergieanlagen-Stahlturmringsegments;
- Fig. 5a:: eine schematische, dreidimensionale Ansicht einer beispielhaften Ausführungsform eines Flanschsegments;
- Fig. 5b:: eine Detailansicht der in Figur 5a gezeigten Ausführungsform;
- Fig. 6:: eine schematische, dreidimensionale Ansicht einer beispielhaften Ausführungsform einer Verbindung zwischen vier Windenergieanlagen-Stahlturmringsegmenten mit Flanschsegmenten; und
- Fig. 7:: eine schematische, dreidimensionale Ansicht von vier miteinander verbundenen Windenergieanlagen-Stahlturmringsegmenten.

In den Figuren sind gleiche oder im Wesentlichen funktionsgleiche bzw. -ähnliche Elemente mit den gleichen Bezugszeichen bezeichnet.

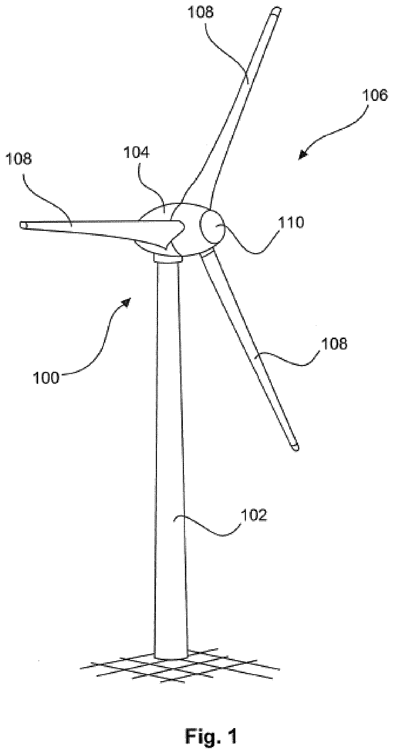

Figur 1 zeigt eine schematische, dreidimensionale Ansicht einer beispielhaften Ausführungsform einer Windenergieanlage. Figur 1 zeigt insbesondere eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Der Turm 102 weist insbesondere Windenergieanlagen-Stahlturmringsegmente mit Flanschsegmenten auf. Dadurch wird der Turm 102 mittels einfach zu transportierender Bauteile aufgebaut, die darüber hinaus mit hoher Präzision und geringem Aufwand verbunden werden können.

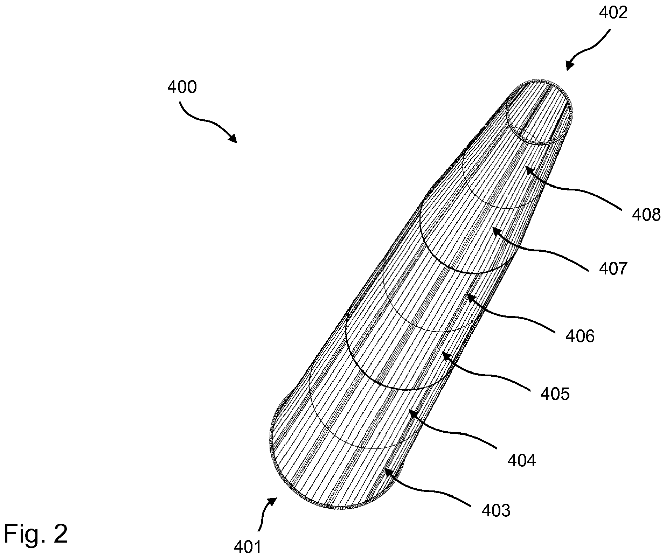

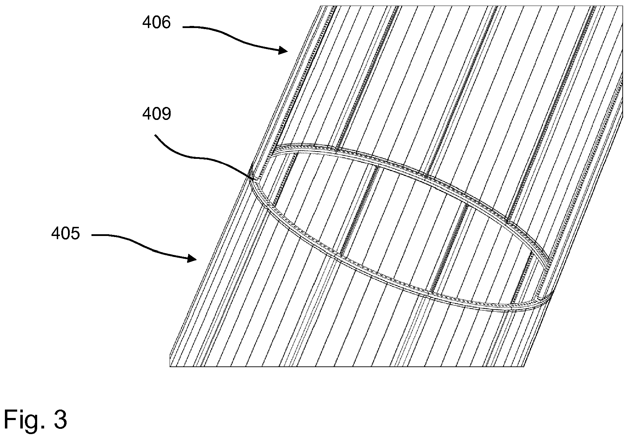

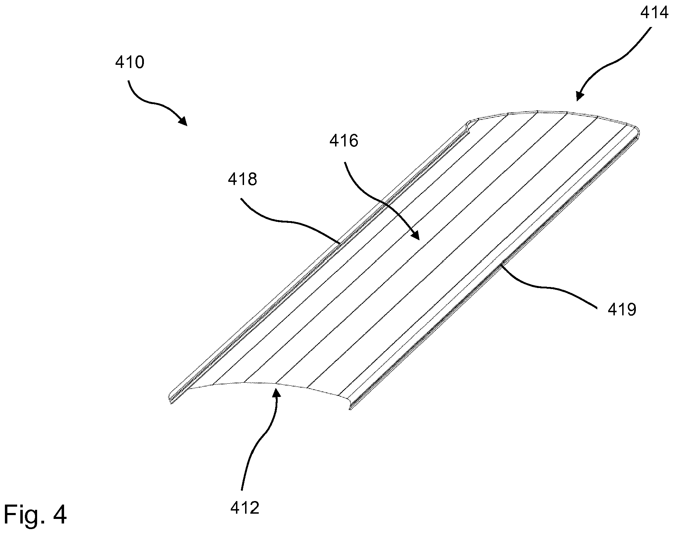

Figur 2 zeigt eine schematische, dreidimensionale Ansicht einer beispielhaften Ausführungsform eines Windenergieanlagen-Turms. Der Turm 400 erstreckt sich in Längsrichtung von einem Fundamentende 401 zu einem Kopfende 402. Im Betriebsmodus bzw. im aufgestellten Zustand ist die Längsrichtung des Turmes 400 in Richtung der Höhe des Turms 400 ausgerichtet. Der Turm 400 umfasst sechs Turmabschnitte 403-408. Insbesondere in der Figur 3 ist zu erkennen, dass die Turmabschnitte, hier gezeigt der dritte Turmabschnitt 405 und der vierte Turmabschnitt 406, an einem horizontalen Stoß 409 aneinander angeordnet sind. In den Figuren 2 und 3 ist ferner zu erkennen, dass die Turmabschnitte 403-408 Windenergieanlagen-Stahlturmringsegmente aufweisen, von denen ein einzelnes exemplarisch in Figur 4 gezeigt ist.

Das in Figur 4 gezeigte Ringsegment 410 erstreckt sich von einem ersten Ende 412 zu einem zweiten Ende 414. Vorzugsweise ist im montierten Zustand das erste Ende 412 dem Fundament des Turmes zugewandt und das zweite Ende 414 ist dem Turmkopf zugewandt. Das Ringsegment 410 weist ferner einen Querschnitt auf, dessen Flächennormale im Wesentlichen parallel zur Höhe ausgerichtet ist, und wobei der Querschnitt eine teilringförmige Geometrie aufweist. Der teilringförmige Querschnitt des Ringsegments 410 wird durch mehrere gerade Abschnitte ausgebildet, wobei die mehreren geraden Abschnitte gewinkelt zueinander angeordnet sind. Das Ringsegment 410 weist infolgedessen eine gekantete Mantelfläche 416 auf. Die gekantete Mantelfläche wird wie hier gezeigt beispielsweise durch insgesamt sieben gerade Abschnitte ausgebildet, wobei die sieben geraden Abschnitte gewinkelt zueinander angeordnet sind. Wie insbesondere der Figur 3 zu entnehmen ist, kann ein einzelner Turmabschnitt beispielsweise insgesamt zehn in horizontaler Richtung benachbart zueinander angeordnete Ringsegmente aufweisen.

Die Ringsegmente sind zur Bildung eines Turmabschnittes an vertikal ausgerichteten Stoßflächen aneinander angeordnet. An den Stoßflächen weißt das Ringsegment 410 einen ersten abgekanteten Flansch 418 und auf der gegenüberliegend angeordneten vertikalen Stoßseite einen zweiten abgekanteten Flansch 419 auf. Der erste abgekantete Flansche 418 und der zweite abgekantete Flansch 419 werden jeweils durch einen geraden Abschnitt ausgebildet, der gewinkelt zu dem Ringsegment 410 angeordnet ist.

Der erste abgekantete Flansch 418 und der zweite abgekantete Flansch 419 sind insbesondere derart angeordnet und ausgebildet, dass bei Anordnung des Ringsegments 410 bei Bildung des Turmabschnittes die Flansche derart ausgerichtet sind, dass an diesen angeordnete Durchtrittsöffnungen Durchtrittsrichtungen aufweisen, die im Wesentlichen parallel zur Ringrichtung ausgerichtet sind.

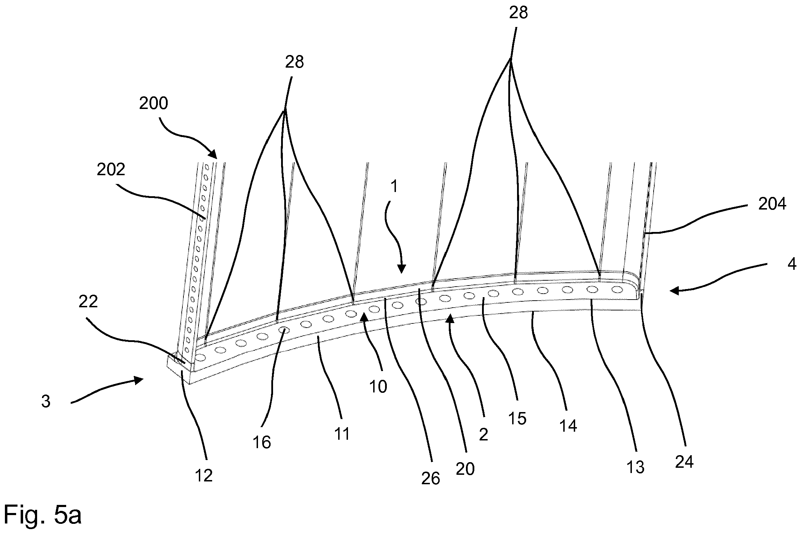

Figur 5a zeigt eine schematische, dreidimensionale Ansicht einer beispielhaften Ausführungsform eines Flanschsegments. Das Flanschsegment 1 weist einen Grundkörper 2 und einen Flanschvorsprung 20 auf. Der Grundkörper 2 erstreckt sich in Ringrichtung von einem ersten Ende 3 zu einem zweiten Ende 4. Der Grundkörper 2 weist eine Innenumfangsseite 11 auf, die durch die Erstreckung des Grundkörpers 2 in Ringrichtung und in Dickenrichtung gebildet wird. Darüber hinaus weist der Grundkörper 2 eine erste Stoßseite 12 auf, die durch die Erstreckung des Grundkörpers in Breitenrichtung und in Dickenrichtung gebildet wird. Darüber hinaus weist der Grundkörper eine Oberseite 10 auf, die durch die Erstreckung in Ringrichtung und die Erstreckung in Breitenrichtung gebildet wird.

Die Oberseite 10 und die Innenumfangsseite 11 bilden eine obere innere Kante 13 aus. Die der Oberseite 10 gegenüberliegend angeordnete Unterseite bildet mit der Innenumfangsseite 11 eine untere innere Kante 14 aus. An der Oberseite 10 sind darüber hinaus Durchtrittsöffnungen 16 äquidistant angeordnet, deren Durchtrittsrichtung im Wesentlichen in Dickenrichtung ausgerichtet ist. Gegenüberliegend von der Innenumfangsseite 11 ist eine Außenumfangsseite angeordnet. Die Außenumfangsseite bildet mit der Oberseite 10 eine obere äußere Kante aus.

Der Flanschvorsprung 20 erstreckt sich in seiner Haupterstreckungsrichtung ebenfalls in Ringrichtung von einem Bereich angrenzend an das erste Ende 3 des Grundkörpers 2 bis zu einem Bereich angrenzend an das zweite Ende 4 des Grundkörpers 1. Der Flanschvorsprung 20 weist zwischen seinem ersten Ende und seinem zweiten Ende, zwischen denen die Haupterstreckungsrichtung verläuft, einen polygonalen Verlauf auf.

Infolgedessen weist der Flanschvorsprung 20 entlang seiner Haupterstreckungsrichtung sechs Abkantungen 28 auf, wobei entlang der Haupterstreckungsrichtung zwischen den Abkantungen Geraden verlaufen, die einen Winkel einschließen. Darüber hinaus ist gezeigt, dass der Übergang 26 von dem Flanschvorsprung 20 zu der inneren Schulterfläche 15 durch eine Freiformfläche ausgebildet ist, wobei die Freiformfläche derart ausgebildet ist, dass ein Radius ausgebildet ist. Die innere Schulterfläche 15 ist der Teil der Oberfläche 10, der innenseitig von dem Flanschvorsprung 20 verortet ist.

Der Flanschvorsprung 20 weist an seinem Ende im Bereich des ersten Endes 3 einen ersten Fortsatz 22 auf. Der erste Fortsatz 22 erstreckt sich in seiner Haupterstreckungsrichtung im Wesentlichen in Breitenrichtung. Am zweiten Ende 4 des Grundkörpers 2 weist der Flanschvorsprung 20 in analoger Weise einen zweiten Fortsatz 24 auf. Durch die Fortsätze 22, 24 kann ein Ringsegment 200 mit abgekanteten Flanschen 202, 204 in vorteilhafter Weise an dem Flanschsegment 1 angeordnet werden.

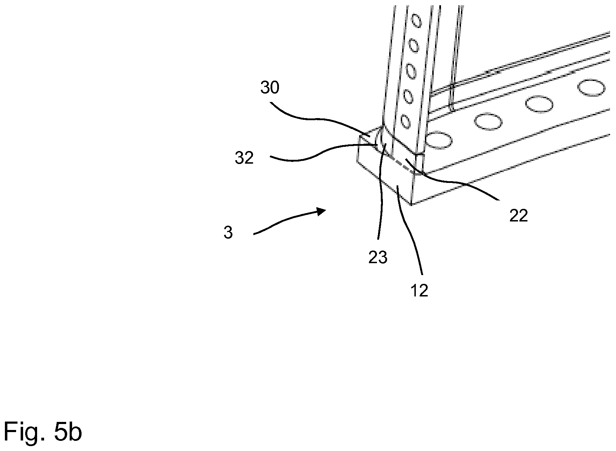

In Figur 5b ist im Detail zu erkennen, dass der Fortsatz 22 in den Flanschvorsprung 20 am ersten Ende 3 mittels eines Fortsatzstückes 23 endet. Es ist ferner zu erkennen, dass das Fortsatzstück 23 und die äußere Umfangsseite des Flanschvorsprungs 20 mittels eines Übergangs 32 in die äußere Schulterfläche 30 übergehen. Die äußere Schulterfläche 30 ist der Teil der Oberfläche 10, der außenseitig von dem Flanschvorsprung 20 verortet ist. Der Übergang 32 erstreckt sich entlang der Haupterstreckungsrichtung des Flanschvorsprungs 20 fort, so dass die äußere Umfangsseite des Flanschvorsprungs 20 mittels des Übergangs 32 in die äußere Schulterfläche 30 übergeht.

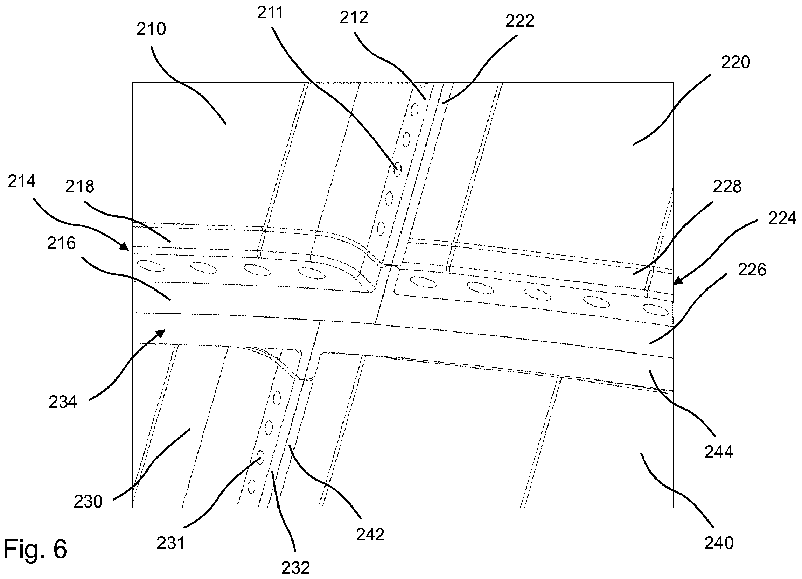

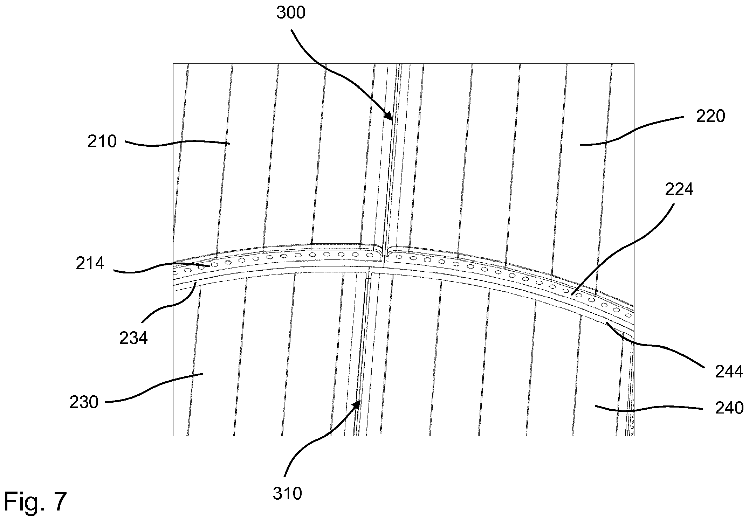

In den Figuren 6 und 7 ist gezeigt, wie insgesamt vier Ringsegmente horizontal und vertikal miteinander verbunden werden können. Das erste Ringsegment 210 und das zweite Ringsegment 220 bilden einen Teilabschnitt eines ersten Windenergieanlagen-Turmabschnitts aus. Das dritte Ringsegment 230 und das vierte Ringsegment 240 bilden einen Teilabschnitt eines zweiten Windenergieanlagen-Turmabschnitts aus. Der erste Windenergieanlagen-Turmabschnitt ist benachbart über dem zweiten Windenergieanlagen-Turmabschnitt angeordnet. Das erste Ringsegment 210 und das zweite Ringsegment 220 sind an einem vertikalen Stoß 300 aneinander angeordnet. Das dritte Ringsegment 230 und das vierte Ringsegment 240 sind an einem vertikalen Stoß 310 aneinander angeordnet.

Der vertikale Stoß 300 und der vertikale Stoß 310 sind in vertikaler Richtung nicht unmittelbar übereinander angeordnet sondern versetzt zueinander. Das erste Ringsegment 210 weist ein erstes Flanschsegment 214, das zweite Ringsegment 220 weist ein zweites Flanschsegment 224, das dritte Ringsegment 230 weist ein drittes Flanschsegment 234 und das vierte Ringsegment 240 weist ein viertes Flanschsegment 244 auf. Die Flanschsegmente 214, 224, 234, 244 sind gemäß der im Vorhergehenden erfolgten Beschreibung an den Ringsegmenten 210, 220, 230, 240 angeordnet. Durch die in den Flanschsegmenten angeordneten Durchtrittsöffnungen können die vertikal benachbarten Flanschsegmente miteinander verbunden werden.

Insbesondere in Figur 6 ist gezeigt, wie die Flanschsegmente 214, 224, 234, 244 an den Ringsegmenten 210, 220, 230, 240 angeordnet sind. Darüber hinaus ist gezeigt, wie die vertikale Verbindung zweier horizontal benachbarter Ringsegmente erfolgt. Auch die vertikalen Flansche 212, 222, 232, 242 weisen Durchtrittsöffnungen 211, 231 auf, deren Durchtrittsrichtung im Wesentlichen in Ringrichtung ausgerichtet ist. Mittels dieser Durchtrittsöffnung und geeigneter Befestigungselemente, beispielsweise Schrauben und Muttern, können die vertikalen Flansche miteinander verbunden werden.

Durch die erfindungsgemäßen Flanschsegmente 200, 214, 224, 234, 244 können Ringsegmente 200, 210, 220, 230, 240 in besonders vorteilhafter Weise miteinander verbunden werden. Durch die Ausbildung des Flanschvorsprungs an den Flanschsegmenten können die Flanschsegmente in vorteilhafter Weise an den Ringsegmenten angeordnet werden. Insbesondere durch ein Schweißverfahren können diese einfach an den Ringsegmenten angeordnet werden, wobei kein oder ein verminderter Verzug der Ringsegmente durch die Wärmeeinbringung während des Schweißprozesses erfolgt.

### BEZUGSZEICHEN

- 1: Flanschsegment
- 2,216,226: Grundkörper
- 3: erstes Ende
- 4: zweites Ende
- 10: Oberseite
- 11: Innenumfangsseite
- 12: erste Stoßseite
- 13: innere obere Kante
- 14: innere untere Kante
- 15: innere Schulterfläche
- 16: Durchtrittsöffnung
- 20, 218, 228: Flanschvorsprung
- 22: erster Fortsatz
- 23: Fortsatzstück
- 24: zweiter Fortsatz
- 26, 32: Übergang
- 28: Abkantung
- 30: äußere Schulterfläche
- 100: Windenergieanlage
- 102,400: Turm
- 104: Gondel
- 106: Rotor
- 108: Rotorblatt
- 110: Spinner
- 200: Ringsegment
- 202, 418: erster abgekanteter Flansch
- 204, 419: zweiter abgekanteter Flansch
- 210: erstes Ringsegment
- 211: Durchtrittsöffnung
- 212, 222, 232, 242: abgekanteter Flansch
- 214: erstes Flanschsegment
- 220: zweites Ringsegment
- 224: zweites Flanschsegment
- 230: drittes Ringsegment
- 231: Durchtrittsöffnung
- 234: drittes Flanschsegment
- 240: viertes Ringsegment
- 244: viertes Flanschsegment
- 300, 310: vertikaler Stoß
- 401: Fundamentende
- 402: Kopfende
- 403: erster Turmabschnitt
- 404: zweiter Turmabschnitt
- 405: dritter Turmabschnitt
- 406: vierter Turmabschnitt
- 407: fünfter Turmabschnitt
- 408: sechster Turmabschnitt
- 409: horizontaler Stoß
- 410: Ringsegment
- 412: erstes Ende
- 414: zweites Ende
- 416: gekantete Mantelfläche
- 418: erster vertikaler Flansch
- 419: zweiter vertikaler Flansch

## Patentansprüche

1. Flanschsegment (1, 214, 224, 235, 244) für ein Windenergieanlagen-Stahlturmringsegment (200, 210, 220, 230, 240), umfassend
- einen teilringförmigen Grundkörper (2, 216, 226), der sich von einem ersten Ende (3) zu einem zweiten Ende (4) in Ringrichtung erstreckt, mit
o einer Oberseite (10) und einer der Oberseite gegenüberliegenden Unterseite,
o einer Innenumfangsseite (11) und einer Außenumfangsseite, und
o einer ersten Stoßseite (12) am ersten Ende und einer zweiten Stoßseite am zweiten Ende,
- einen Flanschvorsprung, welcher
o auf der Oberseite (10) des Grundkörpers angeordnet ist, und
o sich im Wesentlichen von dem ersten Ende zum zweiten Ende in Ringrichtung erstreckt,
**dadurch gekennzeichnet, dass**
- eine innere obere Kante (13) von der Oberseite (10) und der Innenumfangseite ausgebildet wird, wobei der Flanschvorsprung (20, 218, 228) an die innere obere Kante angrenzt,
- wobei eine Innenseite des Flanschvorsprungs mit der Innenumfangsseite (11) fluchtet, so dass die Innenseite des Flanschvorsprungs und die Innenumfangsseite (11) des Grundkörpers eine Flanschsegmentinnenfläche ausbilden.

2. Flanschsegment (1, 214, 224, 235, 244) nach dem vorhergehenden Anspruch, wobei sich der Flanschvorsprung (20) in seiner Haupterstreckungsrichtung von einem ersten Vorsprungende zu einem zweiten Vorsprungende erstreckt und zwischen dem ersten Vorsprungende und dem zweiten Vorsprungende zumindest abschnittsweise einen polygonalen Verlauf aufweist, und/oder wobei der Flanschvorsprung (20) in seiner Haupterstreckungsrichtung durch zwei oder mehrere gerade Abschnitte ausgebildet wird, wobei die geraden Abschnitte einen Winkel einschließen.

3. Flanschsegment (1, 214, 224, 235, 244) nach mindestens einem der vorhergehenden Ansprüche, umfassend
- eine äußere obere Kante, die von der Oberseite (10) und der Außenumfangsseite ausgebildet wird, und/oder
- der Flanschvorsprung (20, 218, 228) an die äußere obere Kante angrenzt, wobei vorzugsweise eine Außenseite des Flanschvorsprungs mit der Außenumfangsseite fluchtet, so dass die Außenseite des Flanschvorsprungs und die Außenumfangsseite des Grundkörpers (2, 216, 226) eine Flanschsegmentaußenfläche ausbilden.

4. Flanschsegment (1, 214, 224, 235, 244) nach mindestens einem der vorhergehenden Ansprüche, wobei
- ein Übergang (32) von dem Flanschvorsprung zur äußeren Schulterfläche (30) durch eine Freiformfläche ausgebildet ist, wobei die Freiformfläche vorzugsweise derart ausgebildet ist, dass zwischen einer der äußeren Schulterfläche zugewandten Innenumfangsseite des Flanschvorsprungs und der äußeren Schulterfläche ein Radius ausgebildet ist.

5. Flanschsegment (1, 214, 224, 235, 244) nach mindestens einem der
vorhergehenden Ansprüche,
wobei
- sich der Flanschvorsprung (20, 218, 228) von einem ersten Vorsprungende zu einem zweiten Vorsprungende erstreckt, und an dem ersten Vorsprungende ein erster Fortsatz (22) und/oder an dem zweiten Vorsprungende ein zweiter Fortsatz (24) angeordnet ist, wobei sich der erste Fortsatz und/oder der zweite Fortsatz in radialer Richtung erstreckt bzw. erstrecken, und/oder
- sich der erste Fortsatz in Richtung einer ersten seitlichen oberen Kante, die von der Oberseite (10) und der ersten Stoßseite (12) ausgebildet wird, erstreckt, und/oder der zweite Fortsatz in Richtung einer zweiten seitlichen Kante, die von der Oberseite (10) und der zweiten Stoßseite ausgebildet wird, erstreckt, und/oder
- das Flanschsegment (1, 214, 224, 235, 244) einstückig ausgebildet ist und vorzugsweise aus dem Vollen hergestellt, insbesondere mittels eines Fräsverfahrens, ist.

6. Windenergieanlagen-Stahlturmringsegment (200, 210, 220, 230, 240), umfassend ein Mantelsegment mit einer Erstreckung in Richtung einer Höhe, einer Ringrichtung und einer Breite umfassend
- eine erste horizontale Stoßseite und eine zweite horizontale Stoßseite, wobei im montierten Zustand die erste horizontale Stoßseite einem Turmfundament und die zweite horizontale Stoßseite einer Turmspitze zugewandt ist,
- wobei an der ersten horizontalen Stoßseite und/oder an der zweiten horizontalen Stoßseite ein Flanschsegment (1, 214, 224, 235, 244) nach mindestens einem der Ansprüche 1-5 angeordnet ist und/oder anordenbar ist.

7. Windenergieanlagen-Stahlturmringsegment (200, 210, 220, 230, 240) nach dem vorhergehenden Anspruch, wobei
- das Flanschsegment (1, 214, 224, 235, 244) mit dem Windenergieanlagen-Stahlturmringsegment mittels einer Verbindung verbunden und/oder verbindbar ist, die in einem Bereich, der an den Flanschvorsprung (20, 218, 228) und das Windenergieanlagen-Stahlturmringsegment angrenzt, angeordnet ist.

8. Windenergieanlagen-Stahlturmringsegment (200, 210, 220, 230, 240) nach mindestens einem der vorhergehenden Ansprüche 6-7, umfassend
- eine erste vertikale Stoßseite und eine zweite vertikale Stoßseite, die im Wesentlichen orthogonal zu den horizontalen Stoßseiten angeordnet sind,
- wobei an der ersten vertikalen Stoßseite ein erster vertikaler Flansch (418), und/oder
- wobei an der zweiten vertikalen Stoßseite ein zweiter vertikaler Flansch (419) angeordnet ist,
- wobei der erste vertikale Flansch und/oder der zweite vertikale Flansch derart angeordnet und ausgebildet ist bzw. sind, dass diese mit einem vertikalen Flansch eines benachbarten Windenergieanlagen-Stahlturmringsegment (200, 210, 220, 230, 240) verbindbar sind, und
- wobei der erste vertikale Flansch und/oder der zweite vertikale Flansch in radialer Richtung nach innen ragen.

9. Windenergieanlagen-Stahlturmringsegment (200, 210, 220, 230, 240) nach mindestens einem der vorhergehenden Ansprüche 6-8, wobei das Mantelsegment einen teilringförmigen Querschnitt aufweist, dessen Flächennormale im Wesentlichen parallel zur Höhe ausgerichtet ist, und wobei
- der teilringförmige Querschnitt eine teilringförmige Geometrie aufweist, und/oder
- der teilringförmige Querschnitt des Mantelsegments durch zwei oder mehrere gerade Abschnitte ausgebildet wird, wobei die zwei oder mehreren geraden Abschnitte gewinkelt zueinander angeordnet sind, und/oder
- der erste vertikale Flansch durch einen geraden Abschnitt ausgebildet ist, der gewinkelt zu dem Mantelsegment angeordnet ist, und/oder
- der zweite vertikale Flansch durch einen geraden Abschnitt ausgebildet ist, der gewinkelt zu dem Mantelsegment angeordnet ist, und/oder
- das Mantelsegment und der erste vertikale Flansch und der zweite vertikale Flansch einstückig ausgebildet sind.

10. Windenergieanlagen-Turmabschnitt, umfassend
- mindestens ein erstes Windenergieanlagen-Stahlturmringsegment (200, 210, 220, 230, 240) nach mindestens einem der Ansprüche 6-9 und ein zweites Windenergieanlagen-Stahlturmringsegment (200, 210, 220, 230, 240) nach mindestens einem der Ansprüche 6-9,
- wobei das erste Windenergieanlagen-Stahlturmringsegment und das zweite Windenergieanlagen-Stahlturmringsegment an mindestens einem im Wesentlichen vertikalen Stoß (300, 310) mit jeweils einer der vertikalen Stoßseiten aneinanderstoßen.

11. Windenergieanlagen-Turm (102, 400), umfassend zwei oder mehrere übereinander angeordnete Windenergieanlagen-Turmabschnitte nach dem vorhergehenden Anspruch.

12. Windenergieanlage (100), umfassend einen Windenergieanlagen-Turm (102, 400) nach dem vorhergehenden Anspruch.

13. Verfahren zur Herstellung eines Windenergieanlagen-Stahlturmringsegments (200, 210, 220, 230, 240) nach den Ansprüchen 6-9, umfassend
- Bereitstellen eines Mantelsegments mit einer Erstreckung in Richtung einer Höhe, einer Ringrichtung und einer Breite, umfassend eine erste horizontale Stoßseite und eine zweite horizontale Stoßseite, wobei im montierten Zustand die erste horizontale Stoßseite einem Turmfundament und die zweite horizontale Stoßseite einer Turmspitze zugewandt ist,
- Herstellen und Bereitstellen mindestens eines Flanschsegments (1, 214, 224, 235, 244) nach mindestens einem der Ansprüche 1-5, wobei das Flanschsegment vorzugsweise aus einem Stück Rohmaterial, insbesondere mittels eines Fräsverfahrens, hergestellt ist,
- Anordnen eines Flanschsegments an einem ersten Innenumfangsabschnitts, der an die erste horizontale Stoßseite angrenzt, und/oder Anordnen eines Flanschsegments an einem zweiten Innenumfangsabschnitt, der an die zweite horizontale Stoßseite angrenzt,
- Verbinden des Flanschsegments bzw. der Flanschsegmente mit dem Mantelsegment,
- wobei vorzugsweise das Verbinden des Flanschsegments bzw. der Flanschsegmente mit dem Mantelsegment mittels einer Schweißnaht erfolgt, die vorzugsweise in einem Bereich angrenzend an den Flanschvorsprung (20, 218, 228) und das Windenergieanlagen-Stahlturmringsegment angeordnet wird.

14. Verfahren zur Herstellung eines Windenergieanlagen-Turmabschnitts nach Anspruch 10, umfassend
- Bereitstellen mindestens eines ersten Windenergieanlagen-Stahlturmringsegments (200, 210, 220, 230, 240) nach mindestens einem der Ansprüche 6-9 und eines zweiten Windenergieanlagen-Stahlturmringsegments nach mindestens einem der Ansprüche 6-9,
- Anordnen des ersten Windenergieanlagen-Stahlturmringsegments und des zweiten Windenergieanlagen-Stahlturmringsegments an mindestens einem vertikalen Stoß mit jeweils einer der vertikalen Stoßseiten,
- Verbinden des ersten Windenergieanlagen-Stahlturmringsegments und des zweiten Windenergieanlagen-Stahlturmringsegments an dem mindestens einen vertikalen Stoß,
- wobei vorzugsweise das erste Windenergieanlagen-Stahlturmringsegment und das zweite Windenergieanlagen-Stahlturmringsegment vertikale Flansche aufweisen, die an der Innenumfangsfläche angrenzend an die Kante zur ersten Stoßseite und/oder zweiten Stoßseite angeordnet sind,
- wobei ferner vorzugsweise das erste Windenergieanlagen-Stahlturmringsegment und das zweite Windenergieanlagen-Stahlturmringsegment durch die Befestigung zweier benachbarter vertikaler Flansche miteinander verbunden werden.

## Claims

1. A flange segment (1, 214, 224, 235, 244) for a wind turbine steel tower ring segment (200, 210, 220, 230, 240), comprising
- a partially ring-shaped basic body (2, 216, 226) which extends from a first end (3) to a second end (4) in the ring direction, having
∘ an upper side (10) and a lower side opposite the upper side,
∘ an inner circumferential side (11) and an outer circumferential side, and
∘ a first abutment side (12) on the first end and a second abutment side on the second end,
- a flange projection which
∘ is arranged on the upper side (10) of the basic body, and
∘ extends substantially from the first end to the second end in the ring direction
**characterized in that**
- an inner upper edge (13) is formed by the upper side (10) and the inner circumferential side, wherein the flange projection (20, 218, 228) adjoins the inner upper edge,
- wherein an inner side of the flange projection is in alignment with the inner circumferential side (11) such that the inner side of the flange projection and the inner circumferential side (11) of the basic body form a flange segment inner surface.

2. The flange segment (1, 214, 224, 235, 244) as claimed in the preceding claim, wherein the flange projection (20) extends in its main direction of extent from a first projection end to a second projection end and has a polygonal profile at least in certain portions between the first projection end and the second projection end, and/or
wherein the flange projection (20) is formed in its main direction of extent by two or more rectilinear portions, wherein the rectilinear portions enclose an angle.

3. The flange segment (1, 214, 224, 235, 244) as claimed in either of the preceding claims, comprising
- an outer upper edge which is formed by the upper side (10) and the outer circumferential side, and/or
- the flange projection (20, 218, 228) adjoins the outer upper edge, wherein preferably an outer side of the flange projection is in alignment with the outer circumferential side such that the outer side of the flange projection and the outer circumferential side of the basic body (2, 216, 226) form a flange segment outer surface.

4. The flange segment (1, 214, 224, 235, 244) as claimed in at least one of the preceding claims, wherein
- a transition (32) is formed from the flange projection to the outer shoulder face (30) by a freeform face, wherein the freeform face is preferably formed in such a way that a radius is formed between an inner circumferential side of the flange projection that faces the outer shoulder face and the outer shoulder face.

5. The flange segment (1, 214, 224, 235, 244) as claimed in at least one of the preceding claims,
wherein
- the flange projection (20, 218, 228) extends from a first projection end to a second projection end, and a first extension (22) is arranged on the first projection end and/or a second extension (24) is arranged on the second projection end, wherein the first extension and/or the second extension extend/extends in the radial direction, and/or
- the first extension extends in the direction of a first lateral upper edge which is formed by the upper side (10) and the first abutment side (12), and/or the second extension extends in the direction of a second lateral edge which is formed by the upper side (10) and the second abutment side, and/or
- the flange segment (1, 214, 224, 235, 244) is formed in one piece and is preferably produced from solid, in particular by means of a milling method.

6. A wind turbine steel tower ring segment (200, 210, 220, 230, 240), comprising a jacket segment having an extent in the direction of a height, a ring direction and a width, comprising
- a first horizontal abutment side and a second horizontal abutment side, wherein, in the mounted state, the first horizontal abutment side faces a tower foundation and the second horizontal abutment side faces a tower tip,
- wherein a flange segment (1, 214, 224, 235, 244) as claimed in at least one of claims 1-5 is arranged and/or can be arranged on the first horizontal abutment side and/or on the second horizontal abutment side.

7. The wind turbine steel tower ring segment (200, 210, 220, 230, 240) as claimed in the preceding claim, wherein
- the flange segment (1, 214, 224, 235, 244) is connected and/or can be connected to the wind turbine steel tower ring segment by means of a connection which is arranged in a region which adjoins the flange projection (20, 218, 228) and the wind turbine steel tower ring segment.

8. The wind turbine steel tower ring segment (200, 210, 220, 230, 240) as claimed in at least one of the preceding claims 6-7, comprising
- a first vertical abutment side and a second vertical abutment side which are arranged substantially orthogonally to the horizontal abutment sides,
- wherein a first vertical flange (418) is arranged on the first vertical abutment side, and/or
- wherein a second vertical flange (419) is arranged on the second vertical abutment side,
- wherein the first vertical flange and/or the second vertical flange are/is arranged and formed in such a way that they can be connected to a vertical flange of an adjacent wind turbine steel tower ring segment (200, 210, 220, 230, 240), and
- wherein the first vertical flange and/or the second vertical flange project/projects inwardly in the radial direction.

9. The wind turbine steel tower ring segment (200, 210, 220, 230, 240) as claimed in at least one of the preceding claims 6-8, wherein the jacket segment has a partially ring-shaped cross section whose surface normal is oriented substantially parallel to the height, and wherein
- the partially ring-shaped cross section has a partially ring-shaped geometry, and/or
- the partially ring-shaped cross section of the jacket segment is formed by two or more rectilinear portions, wherein the two or more rectilinear portions are arranged at an angle to one another, and/or
- the first vertical flange is formed by a rectilinear portion which is arranged at an angle to the jacket segment, and/or
- the second vertical flange is formed by a rectilinear portion which is arranged at an angle to the jacket segment, and/or
- the jacket segment and the first vertical flange and the second vertical flange are formed in one piece.

10. A wind turbine tower portion, comprising
- at least a first wind turbine steel tower ring segment (200, 210, 220, 230, 240) as claimed in at least one of claims 6-9 and a second wind turbine steel tower ring segment (200, 210, 220, 230, 240) as claimed in at least one of claims 6-9,
- wherein the first wind turbine steel tower ring segment and the second wind turbine steel tower ring segment butt against one another with in each case one of the vertical abutment sides at at least one substantially vertical joint (300, 310).

11. A wind turbine tower (102, 400), comprising two or more wind turbine tower portions as claimed in the preceding claim that are arranged above one another.

12. A wind turbine (100), comprising a wind turbine tower (102, 400) as claimed in the preceding claim.

13. A method for producing a wind turbine steel tower ring segment (200, 210, 220, 230, 240) as claimed in claims 6-9, comprising
- providing a jacket segment having an extent in the direction of a height, a ring direction and a width, comprising a first horizontal abutment side and a second horizontal abutment side, wherein, in the mounted state, the first horizontal abutment side faces a tower foundation and the second horizontal abutment side faces a tower tip,
- producing and providing at least one flange segment (1, 214, 224, 235, 244) as claimed in at least one of claims 1-5, wherein the flange segment is preferably produced from one piece of raw material, in particular by means of a milling method,
- arranging a flange segment on a first inner circumferential portion which adjoins the first horizontal abutment side, and/or arranging a flange segment on a second inner circumferential portion which adjoins the second horizontal abutment side,
- connecting the flange segment or the flange segments to the jacket segment,
- wherein preferably the connection of the flange segment or of the flange segments to the jacket segment is achieved by means of a welding seam which is preferably arranged in a region adjoining the flange projection (20, 218, 228) and the wind turbine steel tower ring segment.

14. A method for producing a wind turbine tower portion as claimed in claim 10, comprising
- providing at least a first wind turbine steel tower ring segment (200, 210, 220, 230, 240) as claimed in at least one of claims 6-9 and a second wind turbine steel tower ring segment as claimed in at least one of claims 6-9,
- arranging the first wind turbine steel tower ring segment and the second wind turbine steel tower ring segment at at least one vertical joint with in each case one of the vertical abutment sides,
- connecting the first wind turbine steel tower ring segment and the second wind turbine steel tower ring segment at the at least one vertical joint,
- wherein preferably the first wind turbine steel tower ring segment and the second wind turbine steel tower ring segment have vertical flanges which are arranged on the inner circumferential surface adjoining the edge toward the first abutment side and/or second abutment side,
- wherein further preferably the first wind turbine steel tower ring segment and the second wind turbine steel tower ring segment are connected to one another by the fastening of two adjacent vertical flanges.

## Revendications

1. Segment de bride (1, 214, 224, 235, 244) pour un segment annulaire de tour en acier pour éolienne (200, 210, 220, 230, 240), comprenant
- un corps de base (2, 216, 226) en forme d'anneau partiel qui s'étend depuis une première extrémité (3) à une deuxième extrémité (4) dans le sens annulaire, avec
- un côté supérieur (10) et un côté inférieur opposé au côté supérieur,
- un côté périphérique intérieur (11) et un côté périphérique extérieur, et
- un premier côté d'aboutement (12) à la première extrémité et un deuxième côté d'aboutement à la deuxième extrémité,
- une saillie de bride qui
- est agencée sur le côté supérieur (10) du corps de base, et
- s'étend sensiblement depuis la première extrémité à la deuxième extrémité dans le sens de l'anneau,
**caractérisé en ce que**
- une arête supérieure intérieure (13) est réalisée depuis le côté supérieur (10) et le côté périphérique intérieur, dans lequel la saillie de bride (20, 218, 228) est contiguë à l'arête supérieure intérieure,
- dans lequel un côté intérieur de la saillie de bride s'aligne sur le côté périphérique intérieur (11) de sorte que le côté intérieur de la saillie de bride et le côté périphérique intérieur (11) du corps de base réalisent une surface intérieure de segment de bride.

2. Segment de bride (1, 214, 224, 235, 244) selon la revendication précédente, dans lequel la saillie de bride (20) s'étend dans son sens d'étendue principale depuis une première extrémité de saillie à une deuxième extrémité de saillie et présente au moins par sections une étendue polygonale entre la première extrémité de saillie et la deuxième extrémité de saillie, et/ou
dans lequel la saillie de bride (20) est réalisée dans son sens d'étendue principale par deux ou plusieurs sections droites, dans lequel les sections droites forment un angle.

3. Segment de bride (1, 214, 224, 235, 244) selon au moins l'une quelconque des revendications précédentes, comprenant
- une arête supérieure extérieure qui est réalisée depuis le côté supérieur (10) et le côté périphérique extérieur, et/ou
- la saillie de bride (20, 218, 228) est contiguë à l'arête supérieure extérieure, dans lequel un côté extérieur de la saillie de bride s'aligne de préférence sur le côté périphérique extérieur de sorte que le côté extérieur de la saillie de bride et le côté périphérique extérieur du corps de base (2, 216, 226) réalisent une surface extérieure de segment de bride.

4. Segment de bride (1, 214, 224, 235, 244) selon au moins l'une quelconque des revendications précédentes, dans lequel
- une transition (32) de la saillie de bride à la surface d'épaulement (30) extérieure est réalisée par une surface de forme libre, dans lequel la surface de forme libre est de préférence réalisée de telle manière qu'un rayon soit réalisé entre un côté périphérique intérieur tourné vers la surface d'épaulement extérieure de la saillie de bride et la surface d'épaulement extérieure.

5. Segment de bride (1, 214, 224, 235, 244) selon au moins l'une quelconque des revendications précédentes,
dans lequel
- la saillie de bride (20, 218, 228) s'étend depuis une première extrémité de saillie à une deuxième extrémité de saillie, et au niveau de la première extrémité de saillie un premier prolongement (22) et/ou au niveau de la deuxième extrémité de saillie un deuxième prolongement (24) est agencé, dans lequel le premier prolongement et/ou le deuxième prolongement s'étend ou s'étendent dans le sens radial, et/ou
- le premier prolongement s'étend en direction d'une première arête supérieure latérale qui est réalisée depuis le côté supérieur (10) et le premier côté d'aboutement (12), et/ou le deuxième prolongement s'étend en direction d'une deuxième arête latérale qui est réalisée depuis le côté supérieur (10) et le deuxième côté d'aboutement, et/ou
- le segment de bride (1, 214, 224, 235, 244) est réalisé d'un seul tenant et de préférence fabriqué dans la masse, en particulier au moyen d'un procédé de fraisage.

6. Segment annulaire de tour en acier pour éolienne (200, 210, 220, 230, 240), comprenant un segment d'enveloppe avec une étendue en direction d'une hauteur, d'un sens annulaire et d'une largeur comprenant
- un premier côté d'aboutement horizontal et un deuxième côté d'aboutement horizontal, dans lequel, dans l'état monté, le premier côté d'aboutement horizontal est tourné vers une fondation de tour et le deuxième côté d'aboutement horizontal est tourné vers une pointe de tour,
- dans lequel un segment de bride (1, 214, 224, 235, 244) selon au moins l'une quelconque des revendications 1 - 5 est et/ou peut être agencé au niveau du premier côté d'aboutement horizontal et/ou au niveau du deuxième côté d'aboutement horizontal.

7. Segment annulaire de tour en acier pour éolienne (200, 210, 220, 230, 240) selon la revendication précédente, dans lequel
- le segment de bride (1, 214, 224, 235, 244) est et/ou peut être relié au segment annulaire de tour en acier pour éolienne au moyen d'une liaison qui est agencée dans une zone qui est contiguë à la saillie de bride (20, 218, 228) et au segment annulaire de tour en acier pour éolienne.

8. Segment annulaire de tour en acier pour éolienne (200, 210, 220, 230, 240) selon au moins l'une quelconque des revendications précédentes 6 - 7, comprenant
- un premier côté d'aboutement vertical et un deuxième côté d'aboutement vertical qui sont agencés sensiblement orthogonalement aux côtés d'aboutement horizontaux,
- dans lequel une première bride verticale (418) est agencée au niveau du premier côté d'aboutement vertical, et/ou
- dans lequel une deuxième bride verticale (419) est agencée au niveau du deuxième côté d'aboutement vertical,
- dans lequel la première bride verticale et/ou la deuxième bride verticale sont agencées et réalisées de telle manière que celles-ci puissent être reliées à une bride verticale d'un segment annulaire de tour en acier pour éolienne (200, 210, 220, 230, 240) voisin, et
- dans lequel la première bride verticale et/ou la deuxième bride verticale dépassent dans le sens radial vers l'intérieur.

9. Segment annulaire de tour en acier pour éolienne (200, 210, 220, 230, 240) selon au moins l'une quelconque des revendications précédentes 6 - 8, dans lequel le segment enveloppe présente une section transversale en forme d'anneau partiel, dont la normale à la surface est orientée sensiblement parallèlement à la hauteur, et dans lequel
- la section transversale en forme d'anneau partiel présente une géométrie en forme d'anneau partiel, et/ou
- la section transversale en forme d'anneau partiel du segment d'enveloppe est réalisée par deux ou plusieurs sections droites, dans lequel les deux ou plusieurs sections droites sont agencées coudées l'une à l'autre, et/ou
- la première bride verticale est réalisée par une section droite qui est agencée coudée au segment d'enveloppe, et/ou
- la deuxième bride verticale est réalisée par une section droite qui est agencée coudée au segment d'enveloppe, et/ou
- le segment d'enveloppe et la première bride verticale et la deuxième bride verticale sont réalisés d'un seul tenant.

10. Section de tour pour éolienne comprenant
- au moins un premier segment annulaire de tour en acier pour éolienne (200, 210, 220, 230, 240) selon au moins l'une quelconque des revendications 6 - 9 et un deuxième segment annulaire de tour en acier pour éolienne (200, 210, 220, 230, 240) selon au moins l'une quelconque des revendications 6 - 9,
- dans laquelle le premier segment annulaire de tour en acier pour éolienne et le deuxième segment annulaire de tour en acier pour éolienne s'aboutent sur au moins un aboutement (300, 310) sensiblement vertical avec respectivement un des côtés d'aboutement verticaux.

11. Tour pour éolienne (102, 400) comprenant deux ou plusieurs sections de tour pour éolienne agencées l'une au-dessus de l'autre selon la revendication précédente.

12. Eolienne (100) comprenant une tour pour éolienne (102, 400) selon la revendication précédente.

13. Procédé de fabrication d'un segment annulaire de tour en acier pour éolienne (200, 210, 220, 230, 240) selon les revendications 6 - 9, comprenant les étapes consistant à
- fournir un segment d'enveloppe avec une étendue en direction d'une hauteur, une direction d'anneau et une largeur, comprenant un premier côté d'aboutement horizontal et un deuxième côté d'aboutement horizontal, dans lequel, dans l'état monté, le premier côté d'aboutement horizontal est tourné vers une fondation de tour et le deuxième côté d'aboutement horizontal est tourné vers une pointe de tour,
- fabriquer et fournir au moins un segment de bride (1, 214, 224, 235, 244) selon au moins l'une quelconque des revendications 1 - 5, dans lequel le segment de bride est de préférence fabriqué en une pièce de matériau brut, en particulier au moyen d'un procédé de fraisage,
- agencer un segment de bride au niveau d'une première section périphérique intérieure, qui est contigüe au premier côté d'aboutement horizontal, et/ou agencer un segment de bride au niveau d'une deuxième section périphérique intérieure qui est contigüe au deuxième côté d'aboutement horizontal,
- relier le segment de bride ou les segments de bride au segment d'enveloppe,
- dans lequel la liaison du segment de bride ou des segments de bride avec le segment d'enveloppe est de préférence effectuée au moyen d'un cordon de soudure, qui est de préférence agencé dans une zone de manière contigüe à la saillie de bride (20, 218, 228) et au segment annulaire de tour en acier pour éolienne.

14. Procédé de fabrication d'une section de tour pour éolienne selon la revendication 10, comprenant
- la fourniture d'au moins un premier segment annulaire de tour en acier pour éolienne (200, 210, 220, 230, 240) selon au moins l'une quelconque des revendications 6 -9 et d'un deuxième segment annulaire de tour en acier pour éolienne selon au moins l'une quelconque des revendications 6 - 9,
- l'agencement du premier segment annulaire de tour en acier pour éolienne et du segment annulaire de tour en acier pour éolienne au niveau d'au moins un aboutement vertical avec respectivement un des côtés d'aboutement verticaux,
- liaison du premier segment annulaire de tour en acier pour éolienne et du deuxième segment annulaire de tour en acier pour éolienne au niveau de l'au moins un aboutement vertical,
- dans lequel le premier segment annulaire de tour en acier pour éolienne et le deuxième segment annulaire de tour en acier pour éolienne présentent de préférence des brides verticales qui sont agencées de manière contigüe à la surface périphérique intérieure au niveau de l'arête vers le premier côté d'aboutement et/ou le deuxième côté d'aboutement,
- dans lequel de préférence, le premier segment annulaire de tour en acier pour éolienne et le deuxième segment annulaire de tour en acier pour éolienne sont de plus reliés par la fixation de deux brides verticales contiguës l'un à l'autre.
